(19) **Europäisches Patentamt / European Patent Office / Office européen des brevets**

(11) **EP 3 435 585 B1**

(12) **FASCICULE DE BREVET EUROPEEN**

(45) Date de publication et mention de la délivrance du brevet:
**13.10.2021 Bulletin 2021/41**

(51) Int Cl.:
*H04L 9/00* ^(2006.01)    *G06F 21/72* ^(2013.01)
*G06F 7/72* ^(2006.01)

(21) Numéro de dépôt: **18183804.6**

(22) Date de dépôt: **16.07.2018**

(54) **PROTECTION D'UN CALCUL ITÉRATIF CONTRE DES ATTAQUES HORIZONTALES**

SCHUTZ EINER ITERATIVEN BERECHNUNG GEGEN HORIZONTALE ANGRIFFE

PROTECTION OF AN ITERATIVE CALCULATION AGAINST HORIZONTAL ATTACKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2017 FR 1757037**

(43) Date de publication de la demande:
**30.01.2019 Bulletin 2019/05**

(73) Titulaire: **STMICROELECTRONICS (ROUSSET) SAS**
**13790 Rousset (FR)**

(72) Inventeurs:
- **DIOP, Ibrahima**
  **13013 Marseille (FR)**
- **LINGE, Yanis**
  **13710 Fuveau (FR)**
- **LIARDET, Pierre-Yvan**
  **13790 Peynier (FR)**

(74) Mandataire: **Cabinet Beaumont**
**4, Place Robert Schuman**
**B.P. 1529**
**38025 Grenoble Cedex 1 (FR)**

(56) Documents cités:
**US-A1- 2009 067 617    US-A1- 2014 281 573**

- **Yongje Choi ET AL: "An Improved Square-always Exponentiation Resistant to Side-channel Attacks on RSA Implementation", Intelligent Automation & Soft Computing, 2 juillet 2016 (2016-07-02), pages 353-363, XP055458225, DOI: 10.1080/10798587.2015.1118909 Extrait de l'Internet: URL:https://pdfs.semanticscholar.org/7e29/ 9f901f5913550b84b122cc87739f30d2e11e.pdf [extrait le 2018-03-09]**

**Description**

Domaine

La présente description concerne de façon générale les circuits électroniques et, plus particulièrement, les circuits exécutant des opérations itératives. La présente description concerne plus particulièrement la protection de tels calculs contre des attaques visant à découvrir des quantités manipulées par ces calculs.

Exposé de l'art antérieur

Dans de nombreuses applications, des circuits électroniques mettent en oeuvre des algorithmes de chiffrement, d'authentification, de calcul de signature, et plus généralement des algorithmes manipulant des données, dites secrètes, c'est-à-dire dont on souhaite réserver l'accès à certains utilisateurs ou circuits. Parmi ces algorithmes, certains utilisent des opérations itératives, par exemple pour une exponentiation modulaire, par exemple des algorithmes de type RSA.

De nombreuses méthodes, dites attaques, existent pour tenter de découvrir ou pirater des données secrètes manipulées par ces calculs. Parmi ces attaques, des attaques, dites par canaux cachés, exploitent des informations indirectes telles que la consommation du circuit (attaques SPA, DPA), son rayonnement électromagnétique, etc. L'interprétation de ces informations renseigne le pirate sur la donnée secrète.

Dans les attaques par canaux cachés, on distingue notamment les attaques dites verticales, et les attaques dites horizontales. Les attaques verticales consistent à exploiter l'observation de fuites d'information mesurées lors de plusieurs exécutions utilisant une même information secrète à l'aide d'outils statistiques et par échantillon temporel. Les attaques horizontales consistent à comparer des segments issus d'une même trace (par exemple de consommation ou de rayonnement) entre eux, afin d'extraire l'information secrète. Elles n'utilisent qu'une seule trace d'exécution. Les contremesures de masquage de données qui sont généralement efficaces contre des attaques verticales par canaux cachés ne le sont généralement pas contre les attaques horizontales.

Il existe un besoin d'améliorer la protection des données manipulées par des algorithmes dont chaque exécution met en oeuvre des étapes itératives, contre des attaques par canaux cachés.

Le document US 2014/281573 décrit un procédé de calcul dans lequel les opérandes d'un algorithme d'exponentiation modulaire sont masqués au début d'une exécution de l'algorithme, le masque étant différent d'une exécution à l'autre et pouvant être modifié durant une exécution. Les étapes de calcul itératif exécutées ne sont pas modifiées indépendamment de l'état du bit traité. Le signe de l'opérande et sa position peuvent être intervertis en cours de calcul, les itérations concernées étant soit prédéfinies, soit choisies aléatoirement.

Le document US 2009/067617 décrit un procédé d'exponentiation modulaire dans lequel des bits de l'exposant sont utilisés dans un ordre différent par groupe de bits.

Résumé

Un mode de réalisation pallie tout ou partie des inconvénients des procédés et circuits usuels de protection de données manipulées par des algorithmes contre des attaques par canaux cachés.

L'invention propose un procédé de protection d'un calcul par un circuit électronique qui pallie tout ou partie des inconvénients des procédés usuels en proposant un procédé de calcul efficace contre des attaques horizontales.

Ainsi, on prévoit un procédé de protection d'un calcul itératif sur un premier nombre et un deuxième nombre, exécuté par un circuit électronique, dans lequel, pour chaque bit du deuxième nombre, des étapes du calcul itératif sont sélectionnées aléatoirement parmi au moins deux algorithmes, indépendamment de l'état du bit concerné, les algorithmes sont un carré-multiplication systématique et une multiplication de Montgomery, les étapes du calcul itératif sont choisies, pour un bit courant du deuxième nombre, parmi au moins deux algorithmes de calcul modulaire.

Les étapes du calcul itératif sont en outre, pour chaque bit du deuxième nombre, différentes selon l'état du bit.

Le procédé comporte les étapes suivantes :

initialiser des registres ou emplacements mémoire ;
successivement, pour chaque bit du deuxième nombre :

sélectionner aléatoirement un algorithme à utiliser pour les étapes de calcul itératif de l'itération courante ;
mettre à jour les registres ou emplacements mémoire si nécessaire ; et
exécuter les étapes de calcul itératif de l'algorithme sélectionné.

Pn prévoit aussi un circuit électronique configuré pour la mise en oeuvre du procédé.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, de façon schématique, un mode de réalisation d'un circuit électronique ;

la figure 2 représente, de façon schématique, un exemple de calcul d'exponentiation modulaire basé sur la méthode dite échelle de Montgomery (Montgomery Powering Ladder) ;

la figure 3 représente, de façon schématique, un exemple de calcul d'exponentiation modulaire basé sur la méthode dite du carrée-multiplication systématique (Square-and-Multiply Always) ;

la figure 4 représente, sous forme de blocs, un mode de réalisation d'un procédé de protection d'un calcul d'exponentiation modulaire, appliqué aux algorithmes des figures 2 et 3 ; et

la figure 5 représente, sous forme de blocs, un autre mode de réalisation d'un procédé de protection d'un calcul itératif.

Description détaillée

De mêmes éléments ont été désignés par de mêmes références aux différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation qui vont être décrits ont été représentés et seront détaillés. En particulier, les applications des calculs exécutés ou celles des circuits les exécutant n'ont pas été détaillées, les modes de réalisation décrits étant compatibles avec les applications usuelles.

Sauf précision contraire, lorsque l'on fait référence à deux éléments connectés entre eux, cela signifie directement connectés sans élément intermédiaire autre que des conducteurs, et lorsque l'on fait référence à deux éléments reliés entre eux, cela signifie que ces deux éléments peuvent être directement reliés (connectés) ou reliés par l'intermédiaire d'un ou plusieurs autres éléments.

Dans la description qui suit, les expressions "approximativement", "sensiblement", et "de l'ordre de" signifient à 10 % près, de préférence à 5 % près.

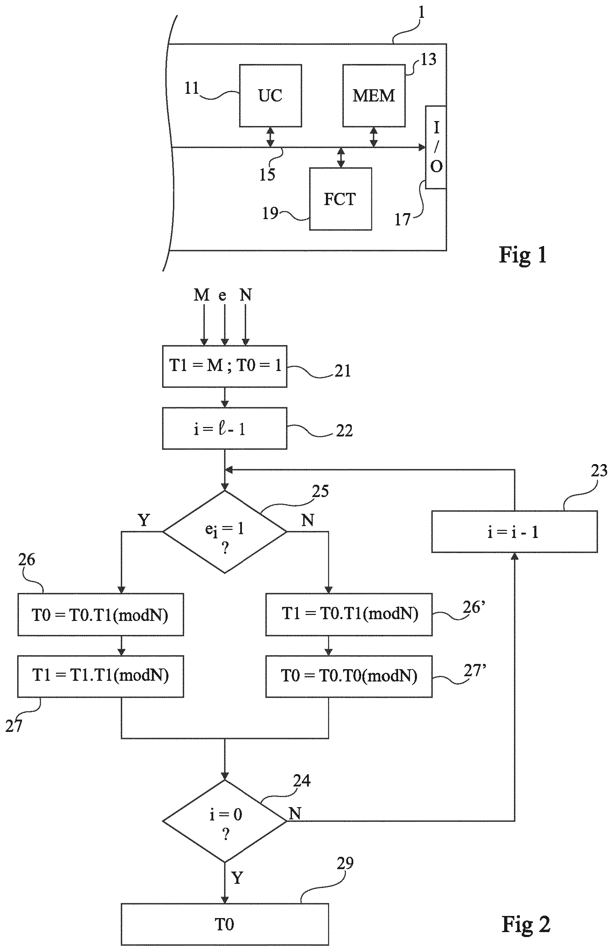

La figure 1 représente, de façon très schématique, un circuit électronique 1 du type auquel s'appliquent les modes de réalisation qui vont être décrits.

Le circuit 1 comporte :

une entité de calcul 11 (UC), par exemple une machine d'états, un microprocesseur, un circuit logique programmable, etc. ;

une ou plusieurs zones 13 (MEM) de stockage volatile et/ou non volatile pour stocker tout ou partie des données et clés ;

un ou plusieurs bus 15 de données, d'adresses et/ou de commandes entre les différents éléments internes au circuit 1 et une interface d'entrée-sortie 17 (I/O) de communication avec l'extérieur du circuit 1.

Le circuit 1 peut inclure divers autres circuits en fonction de l'application, symbolisés en figure 1 par un bloc 19 (FCT).

Des opérations de calcul itératif, par exemple d'exponentiation modulaire, se retrouvent dans de nombreux algorithmes de chiffrement parmi lesquels, par exemple, l'algorithme connu sous la dénomination RSA.

Une exponentiation modulaire consiste à calculer le résultat C de l'exponentiation d'un nombre M par un exposant e (entier) modulo N, c'est-à-dire appliquer la formule :

$$C = M^e \pmod{N}.$$

Le plus souvent :

le nombre M représente le nombre (ou une information représentative du nombre) que l'on souhaite chiffrer, authentifier, signer, etc. ; et

l'exposant e et le modulo N (le couple (e, N)) représentent la clé (ou des informations représentatives de la clé) de chiffrement, d'authentification, de signature, etc.

Afin de simplifier la description qui suit, on fera référence à une exponentiation modulaire notée $C = M^e$ (mod N), la transposition aux variables utilisées selon l'opération réalisée en pratique étant à la portée de l'homme du métier.

Le calcul de l'exponentiation modulaire par un circuit électronique (une machine d'états, un processeur exécutant le procédé sous forme de programme, un circuit logique programmable, etc.), par exemple le circuit 1, s'effectue par exemple, en appliquant une méthode dite échelle de Montgomery (Montgomery Powering Ladder), en appliquant une méthode dite de carré-multiplication systématique (Square-and-Multiply Always), ou d'autres méthodes basées sur l'utilisation de deux variables ou registres et effectuant des calculs itératifs pour chaque bit de l'exposant.

Dans les exemples décrits ci-dessous, le calcul utilise au moins deux registres du circuit 1, ou deux emplacements mémoire, notés arbitrairement T0 et T1 sur lesquels vont être effectuées les opérations.

Le message, par exemple le nombre M, à soumettre à l'exponentiation modulaire est chargé dans le registre T1. L'exposant e est lu, bit par bit, au cours du calcul.

Par la suite, pour simplifier, on confondra les registres et leurs contenus, c'est-à-dire qu'en faisant référence à des opérations sur les registres, on entend sur leurs contenus.

La figure 2 représente, sous forme de blocs, les étapes d'un calcul par la méthode de l'échelle de Montgomery.

Dans une première étape (bloc 21, T1=M, T0=1), le registre T1 est chargé avec le nombre M et le registre T0 est initialisé à 1. L'exposant e est chargé dans un autre registre (non représenté) ou réside dans la mémoire (ei représentant chaque bit de l'exposant e, où i désigne le rang allant de 0 à 1-1).

On entame alors un calcul en boucle sur les bits de l'exposant e. Par exemple, un compteur i est initialisé à 1-1 (bloc 22, i=l-1) et est décrémenté de 1 (bloc 23, i=i-1) à chaque traitement d'un bit ei de l'exposant tant que tous les bits n'ont pas été traités (bloc 24, i=0 ?).

A chaque itération, c'est-à-dire pour chaque bit ei de gauche à droite, on commence par tester la valeur du bit de l'exposant (bloc 25, $e_i$=1 ?).

Si le bit courant ei vaut 1 (sortie Y du bloc 25), le contenu du registre T0 est multiplié, modulo N, par le contenu du registre T1 et le résultat est placé dans le registre T0 (bloc 26, T0=T0.T1 (mod N)), puis le contenu du registre T1 est élevé au carré, modulo N, et le résultat est placé dans le registre T1 (bloc 27, T1=T1.T1 (mod N)).

Si le bit courant ei vaut 0 (sortie N du bloc 25), le contenu du registre T0 est multiplié, modulo N, par le contenu du registre T1 et le résultat est placé dans le registre T1 (bloc 26', T1=T0.T1 (mod N)), puis le contenu du registre T0 est élevé au carré, modulo N, et le résultat est placé dans le registre T0 (bloc 27', T0=T0.T0 (mod N)).

Tant que tous les bits de l'exposant e n'ont pas été traités (sortie N du bloc 24), on décrémente le compteur i (bloc 23) et on revient à l'étape 25. Une fois que tous les bits de l'exposant e ont été traités (sortie Y du bloc 24), le registre T0 contient le résultat de l'exponentiation modulaire (bloc 29, T0), c'est-à-dire la valeur C = $M^e$ (mod N).

Le calcul illustré par la figure 2 peut s'écrire également de la façon suivante :

T0 = 1 (étape 21)
T1 = M (étape 21)
Pour i=l-1 à 0 (étapes 22 à 27) :

   b = 1-ei
   Tb = Tb.Tei (mod N)
   Tei = Tei.Tei (mod N)

Fin de boucle (sortie Y du bloc 24)
Retourner T0 (étape 29).

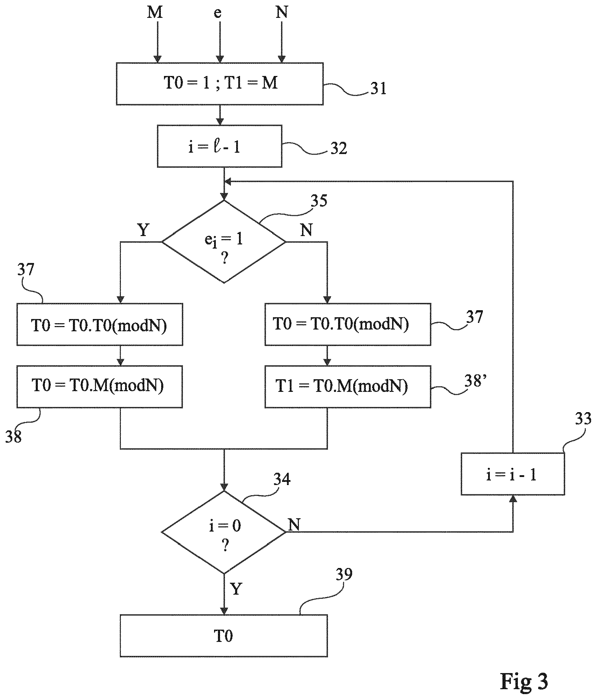

La figure 3 représente, sous forme de blocs, les étapes d'un calcul d'exponentiation modulaire par la méthode de carré-multiplication systématique.

Comme en figure 2, le calcul utilise au moins deux registres du circuit 1, ou deux emplacements mémoire, notés arbitrairement T0 et T1, sur lesquels vont être effectuées les opérations.

Dans une première étape (bloc 31, T0=1, T1=M), le registre T0 est initialisé à 1 et le registre T1 est chargé avec le nombre M. L'exposant e est là encore chargé dans un autre registre (non représenté) ou réside dans la mémoire (ei représentant chaque bit de l'exposant e, où i désigne le rang allant de 0 à 1-1).

On entame alors un calcul en boucle sur les bits de l'exposant e. Par exemple, un compteur i est initialisé à 1-1 (bloc 32, i=l-1) et est décrémenté de 1 (bloc 33, i=i-1) à chaque traitement d'un bit ei de l'exposant tant que tous les bits n'ont pas été traités (bloc 34, i=0 ?).

A chaque itération, c'est à dire pour chaque bit ei de gauche à droite, on commence par tester la valeur du bit de l'exposant (bloc 35, $e_i$=1 ?).

Si le bit courant ei vaut 1 (sortie Y du bloc 35), le contenu du registre T0 est élevé au carré, modulo N, et le résultat est placé dans le registre T0 (bloc 37, T0=T0.T0 (mod N)), puis le contenu du registre T0 est multiplié, modulo N, par le nombre M et le résultat est placé dans le registre T0 (bloc 38, T0=T0.M (mod N)).

Si le bit courant ei vaut 0 (sortie N du bloc 35), le contenu du registre T0 est élevé au carré, modulo N, et le résultat est placé dans le registre T0 (bloc 37, T0=T0.T0 (mod N)), puis le contenu du registre T0 est multiplié, modulo N, par le nombre M et le résultat est placé dans le registre T1 (bloc 38', T1=T0.T1 (mod N)).

Tant que tous les bits de l'exposant e n'ont pas été traités (sortie N du bloc 34), on décrémente le compteur i (bloc 33) et on revient à l'étape 35. Une fois que tous les bits de l'exposant e ont été traités (sortie Y du bloc 34), le registre T0 contient le résultat de l'exponentiation modulaire (bloc 39, T0), c'est-à-dire la valeur C = $M^e$ (mod N).

Le calcul illustré par la figure 3 peut s'écrire également de la façon suivante :

T0 = 1 (étape 31)
T1 = M (étape 31)
Pour i=l-1 à 0 (étapes 32 à 38) :

   b = 1-ei
   T0=T0.T0 (mod N)
   Tb =T0.M (mod N)

Fin de boucle (sortie Y du bloc 34)
Retourner T0 (étape 39).

On a déjà proposé, que ce soit pour l'exemple de la figure 2 ou pour celui de la figure 3, d'introduire des nombres aléatoires pour masquer les données d'entrée M, e et N.

Une telle solution est efficace sur les attaques verticales. Toutefois, cette technique de masquage est sans effet sur des attaques horizontales dans la mesure où les attaques horizontales n'exploitent qu'une seule trace, donc une seule exécution.

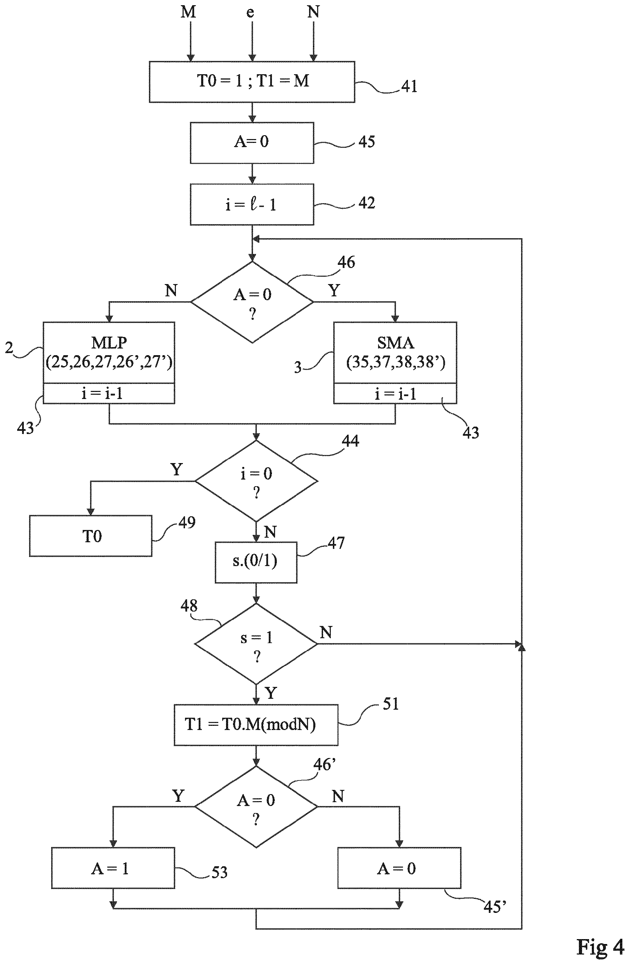

La figure 4 représente, sous forme de blocs, un mode de réalisation d'un procédé de protection d'un calcul d'exponentiation modulaire résistant à des attaques horizontales par canaux cachés.

On tire profit du fait que la plupart des algorithmes de calcul d'exponentiation modulaire exploitent des registres dont le contenu à chaque fin de traitement d'un bit de l'exposant est prédictible. De plus, dans la plupart des cas, le registre destiné à contenir le résultat a le même contenu quel que soit l'algorithme utilisé.

Comme précédemment, l'objectif est de calculer la valeur C = M$^e$ (mod N).

Le calcul utilise toujours deux registres du circuit 1, notés arbitrairement T0 et T1 sur lesquels vont être effectuées les opérations. De même, le message, par exemple le nombre M, à soumettre à l'exponentiation modulaire, est chargé dans le registre T1. L'exposant e est là encore chargé dans un autre registre (non représenté) ou réside dans la mémoire (ei représentant chaque bit de l'exposant e, où i désigne le rang allant de 0 à 1-1).

Selon les modes de réalisation décrits, on choisit de façon aléatoire l'algorithme à utiliser pour traiter un bit ou un ensemble de bits de l'exposant, c'est-à-dire les opérations effectuées sur les registres T0 et T1. Le choix s'effectue, de préférence, à chaque bit de l'exposant.

Ainsi, comme représenté en figure 4, pour certains bits de l'exposant, on utilise l'algorithme de l'échelle de Montgomery (figure 2) et pour les autres bits, on utilise l'algorithme de carré-multiplication systématique (figure 3). Dans cet exemple, les étapes concernées par le changement d'algorithme sont les étapes 25, 26, 27, 26', 27' et les étapes 35, 37, 38, 38'.

A chaque changement d'algorithme, on prévoit de modifier si besoin le contenu du registre T1 pour le rendre compatible avec l'itération suivante effectuée par l'autre algorithme.

Ainsi, dans une première étape (bloc 41, T1=M, T0=1), le registre T0 est comme précédemment initialisé à 1 et le registre T1 est chargé, par exemple, avec le nombre M. L'exposant e est chargé dans un autre registre (non représenté) ou réside dans la mémoire (ei représentant chaque bit de l'exposant e, où i désigne le rang allant de 0 à 1-1).

On sélectionne ensuite l'algorithme à utiliser pour la première opération, c'est-à-dire pour le premier bit de l'exposant. Cette sélection est symbolisée, arbitrairement, par l'initialisation d'un drapeau A à la valeur 0 (bloc 45, A = 0), le drapeau pouvant prendre deux valeurs (0 ou 1).

On entame alors un calcul en boucle sur les bits de l'exposant e. Par exemple, un compteur i est initialisé à l-1 (bloc 42, i=l-1) et est décrémenté de 1 (blocs 43, i=i-1) à chaque traitement d'un bit ei de l'exposant tant que tous les bits n'ont pas été traités (bloc 44, i=0 ?).

Selon un mode de réalisation préféré, les registres T0 et T1 utilisés pour l'application des deux algorithmes sont les mêmes et on se contente de s'assurer que le contenu de chaque registre utilisé pour l'itération suivante soit adapté à l'algorithme utilisé.

Ainsi, à chaque itération, c'est à dire pour chaque bit ei de gauche à droite, on commence par vérifier l'état du drapeau A (bloc 46, A = 0 ?) pour sélectionner l'algorithme à exécuter. Par exemple, si le drapeau A vaut 1 (sortie N du bloc 46), on exécute l'algorithme de Montgomery (bloc 2, MLP (25, 26, 27, 26', 27')) sur le bit courant ei de l'exposant, donc les étapes 25 puis 26 et 27, ou 26' et 27' de l'algorithme de la figure 2. A l'inverse, si le drapeau A vaut 0 (sortie Y du bloc 46), on exécute l'algorithme de carré-multiplication systématique (bloc 3, SMA (35, 37, 38, 38')) sur le bit courant ei de l'exposant, donc les étapes 35, puis 37 et, 38 ou 38' de l'algorithme de la figure 3. Le décrément du compteur i (bloc 43, i=i-1) intervient après le traitement du bit de l'exposant ei par l'un ou l'autre des algorithmes.

Tant que tous les bits de l'exposant e n'ont pas été traités (sortie N du bloc 44), on effectue un tirage aléatoire pour déterminer si l'on change d'algorithme ou non pour la prochaine itération (le bit désormais courant de l'exposant). Par exemple, on tire un bit s aléatoirement (bloc 47, s (0/1)) et l'état de ce bit s conditionne (bloc 48, s=1 ?) si l'on garde le même algorithme pour l'itération à vernir. Si le bit s est à 0 (sortie N du bloc 48), on revient au bloc 46 pour traiter le bit d'exposant. Si le bit s est à 1 (sortie Y du bloc 48), on entame des étapes d'inversion de l'algorithme utilisé. Pour cela, il faut changer la valeur du drapeau A et mettre à jour les contenus des registres T0 et T1 afin qu'ils soient adaptés à l'exécution de l'itération suivante par l'autre algorithme.

Dans ce cas, il n'y a rien à faire sur le registre T0. Toutefois, pour basculer de l'algorithme de carré-multiplication systématique (figure 3) vers l'algorithme de Montgomery (figure 2), il faut mettre à jour (bloc 51, T1=T0.M (mod N)) le registre T1 à la valeur T0.M (mod N). Dans l'autre sens, pour basculer de l'algorithme de Montgomery vers l'algorithme de carré-multiplication systématique, on pourrait ne rien faire comme mise à jour, les contenus des registres T0 et T1 étant, en fin de chaque itération selon l'algorithme de Montgomery, compatibles pour une exécution directe de l'itération suivante avec l'algorithme de carré-multiplication systématique. Toutefois, afin d'équilibrer les calculs (ce qui sert contre des attaques verticales), on préfère effectuer la même opération 51.

On teste ensuite (bloc 46', A=0 ?) la valeur du drapeau A. Si sa valeur est 1 (sortie N du bloc 46'), on inverse l'état du drapeau A pour qu'il vaille 0 (bloc 45', A=0) pour basculer de l'algorithme de Montgomery (figure 2) vers l'algorithme de carré-multiplication systématique (figure 3). Si la valeur du drapeau A vaut est 0 (sortie Y du bloc 46'), on inverse l'état du drapeau A pour qu'il vaille 1 (bloc 53, A=1) pour basculer de l'algorithme de carré-multiplication systématique (figure 3) vers l'algorithme de Montgomery (figure 2).

On revient alors au bloc 46 pour traiter le bit d'exposant, désormais en ayant changé d'algorithme.

L'étape 51 peut être effectuée après le test 46'.

Une fois que tous les bits de l'exposant e ont été traités (sortie Y du bloc 44), le registre T0 contient le résultat de l'exponentiation modulaire (bloc 49, T0), c'est-à-dire la valeur C = M$^e$ (mod N).

Dans la réalisation de la figure 4, on tire profit de la structure des algorithmes utilisés qui ne requiert pas de modifier le registre T0 en cas de changement d'algorithme d'une itération à une autre.

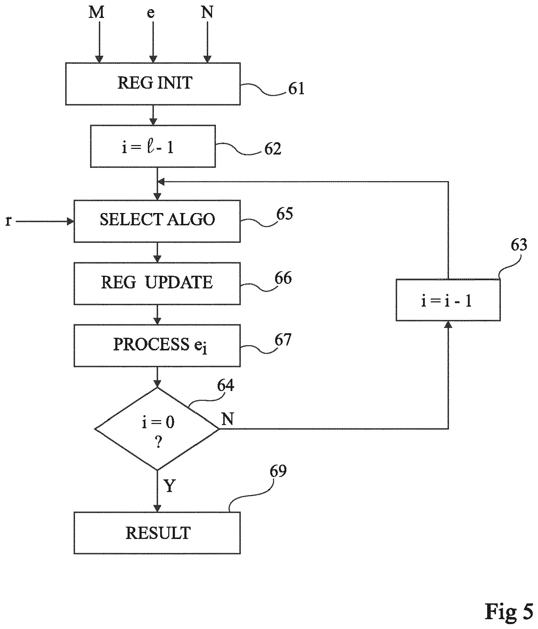

La figure 5 représente, sous forme de blocs, un autre mode de réalisation d'un procédé de protection d'un calcul d'exponentiation modulaire.

Dans une première étape (bloc 61, REG INIT), on initialise les registres utilisés pour le calcul et on charge les valeurs M, e et N.

On entame alors un calcul en boucle sur les bits de l'exposant e. Par exemple, un compteur i est initialisé à l-1 (bloc 62, i=l-1) et est décrémenté de 1 (bloc 63, i=i-1) à chaque traitement d'un bit ei de l'exposant tant que tous les bits n'ont pas été traités (bloc 64, i=0 ?).

A chaque itération, on sélectionne de façon aléatoire (bloc 65, SELECT ALGO), par exemple en tirant un nombre aléatoire r, l'algorithme à utiliser pour l'itération courante.

On met alors à jour si nécessaire les contenus des registres (bloc 66, REG UPDATE) en fonction de l'algorithme à exécuter.

Puis, on exécute les étapes du calcul itératif (bloc 67, PROCESS ei) en fonction de l'algorithme sélectionné.

Tant que tous les bits de l'exposant e n'ont pas été traités (sortie N du bloc 64), on décrémente le compteur i (bloc 63) et on revient à l'étape 65. Une fois que tous les bits de l'exposant e ont été traités (sortie Y du bloc 64), on fournit le résultat de l'exponentiation modulaire (bloc 69, RESULT), c'est-à-dire la valeur $C = M^e$ (mod N).

On notera que la sélection de l'algorithme à utiliser pour les étapes de calcul itératif est indépendante de l'état du bit de l'exposant. C'est à l'intérieur de ces étapes qu'une sélection s'effectue en fonction du bit de l'exposant.

Un avantage des modes de réalisation décrits est qu'en changeant à l'intérieur d'une exécution d'un calcul itératif, l'algorithme utilisé d'une itération à une autre, indépendamment de l'état du bit de l'exposant, de préférence aléatoirement donc également indépendamment du rang de ce bit d'exposant, on réduit le nombre de valeurs exploitables pour une attaque horizontale.

De plus, le fait de changer le comportant du circuit d'une itération à l'autre rend plus difficile de trouver des points d'intérêts dans la trace du circuit.

Un autre avantage de la contremesure proposée est qu'elle est également efficace en cas d'attaques verticales.

**Revendications**

1. Procédé de protection d'un calcul itératif d'exponentiation modulaire d'un premier nombre (M) par un deuxième nombre (e), exécuté par un circuit électronique (1), comportant les étapes suivantes :

    initialiser un premier registre ou emplacement mémoire (T0) à l'unité ;
initialiser un deuxième registre ou emplacement mémoire (T1) à la valeur du premier nombre (M) ; et
successivement, pour chaque bit (ei) du deuxième nombre :

        sélectionner, aléatoirement, indépendamment de l'état du bit concerné, des étapes de calcul itératif entre celles (25, 26, 26', 27, 27') d'un premier algorithme (2) mettant en œuvre un carré-multiplication systématique et celles (35, 37, 38, 38') d'un deuxième algorithme (3) mettant en œuvre une multiplication de Montgomery ; et
en cas de changement d'algorithme, mettre à jour le contenu du deuxième registre ou emplacement mémoire avant d'exécuter les étapes de calcul itératif,

    le résultat du calcul étant contenu dans ledit premier registre ou emplacement mémoire.

2. Procédé selon la revendication 1, dans lequel les étapes du calcul itératif sont en outre, pour chaque bit du deuxième nombre (e), différentes selon l'état du bit.

3. Circuit électronique (1) configuré pour la mise en oeuvre du procédé selon la revendication 1 ou 2.

**Patentansprüche**

1. Verfahren zum Schutz einer iterativen Berechnung der modularen Potenzierung einer ersten Zahl (M) durch eine zweite Zahl (e), die von einer elektronischen Schaltung (1) ausgeführt wird, mit den folgenden Schritten:

    Initialisieren eines ersten Registers oder Speicherplatzes T0) auf Eins;
Initialisieren eines zweiten Registers oder Speicherplatzes (T1) auf den Wert der ersten Zahl (M); und
nacheinander, für jedes Bit (ei) der zweiten Zahl:

        zufällige Auswahl, unabhängig vom Zustand des betreffenden Bits, von iterativen Rechenschritten zwischen denen (25, 26, 26', 27, 27') eines ersten Algorithmus (2), der systematisch eine Quadratmultiplikation durchführt, und denen (35, 37, 38, 38') eines zweiten Algorithmus (3), der eine Montgomery-Multiplikation durchführt; und im Falle einer Änderung des Algorithmus, Aktualisieren des Inhalts des zweiten Registers oder Speicherplatzes vor der Ausführung der iterativen Rechenschritte, wobei das Ergebnis der Berechnung in dem ersten Register oder Speicherplatz enthalten ist.

2. Verfahren nach Anspruch 1, wobei die Schritte der iterativen Berechnung ferner je nach dem Zustand des Bits der zweiten Zahl (e) unterschiedlich sind.

3. Elektronische Schaltung (1), die konfiguriert ist zum Implementieren des Verfahrens nach einem der Ansprüche 1 oder 2.

## Claims

1. A method of protecting an iterative calculation of modular exponentiation of a first number (M) by a second number (e), executed by an electronic circuit (1), comprising the following steps:

   initializing a first memory location or register (T0) to one;
   initializing a second memory location or register (T1) to the value of the first number (M); and successively, for each bit ($e_i$) of the second number:

   randomly selecting, irrespectively of the state of the concerned bit, iterative calculation steps between those (25, 26, 26', 27, 27') of a first algorithm (2) systematically implementing a square-multiply and those (35, 37, 38, 38') of a second algorithm (3) implementing a Montgomery multiplication; and in case of a change of algorithm, updating the content of the second memory register or location before executing the iterative calculation steps,

   the result of the calculation being contained in the first memory location or register.

2. The method of claim 1, wherein the steps of the iterative calculation are further different according to the state of the bit of the second number (e).

3. An electronic circuit (1) configured to implement the method of any claim 1 or 2.

Fig 1

Fig 2

M        e        N

T0 = 1 ; T1 = M          31

i = ℓ - 1          32

35

Y          $e_i = 1$          N
                ?

37

T0 = T0.T0(modN)          T0 = T0.T0(modN)          37

T0 = T0.M(modN)          T1 = T0.M(modN)          38'

38

33

i = i - 1

34

i = 0          N
?

Y

39

T0

Fig 3

Fig 4

Fig 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014281573 A

- US 2009067617 A